# EUROPEAN PATENT APPLICATION

(11) **EP 4 627 931 A1**
(43) Date of publication of application: **08.10.2025**
(21) Application number: 25167000.6
(22) Date of filing: 28.03.2025
(51) Int. Cl.: A23G 9/04, A23G 9/28, G01F 23/292

(54) **ELECTRONIC CONTROL DEVICE FOR MONITORING REAL-TIME THE FILLING LEVEL OF THE TANK OF A FOOD MAKER**

(30) Priority: 05.04.2024 IT 202400007624
(71) Applicant: Beta Electronics S.r.l., 28010 Vaprio d'Agogna (IT)
(72) Inventor: BARBIERI, Giancarlo, 28028 Pettenasco (IT)
(74) Representative: Emmi, Mario

(57) **Abstract**

The present invention concerns the use of at least one element (14) sensitive to light, for example a photovoltaic cell, for detecting the level of product present in a tank (10) of a product dispensing machine, preferably a slush machine.

## Description

### Scope of the invention

The present invention concerns the technical field of real-time monitoring of machineries for food preparations which allow obtaining and dispensing a final product, in particular machineries dispensing food products (therefore, final product in the fluid state, such as liquid or mixture of liquid and solid), more in particular of the cold type, such as creams (for example coffee creams), cold drinks, slushes, fruit juices, etc.

In particular, the invention refers to a system which allows real-time control of the filling level of the tank of these machineries dispensing food products, preferably, but not necessarily, in the field of slush machines.

### Brief outline of the prior art

It is known that food dispensing machines are capable of preparing and dispensing many products, generally in a fluid state, for example liquid (see fruit juices), creamy or with a certain density such as, for example, slushes which result in a mixture of liquid and crushed ice and therefore with a certain consistency.

These machineries, now widely known and marketed, generally provide a tank where the product to be dispensed is processed and kept.

Generally, special preparations are used which, once poured into the machinery, for example right into the tank, are processed at the correct temperature in order to obtain the finished product which can then be dispensed through a suitable tap.

For example, slush machines provide cooling systems in this tank which keep the tank at the correct temperature. The preparation is poured into the tank together with any other ingredients (for example the addition of water) and the machine makes slush which can then be dispensed through a tap.

Similar machineries can provide for the preparation of products such as creams, for example coffee cream or even more simply drinks such as tea, orange juice and juices in general.

These machineries generally prepare and therefore allow the dispensing of "cold" products, i.e. products that are at temperatures that, for example, can be lower than 10°C or that can approach 0°C or even be below 0°C.

A technical issue felt is the one relative to monitoring the machine remotely, in particular the possibility of being able to control the filling level of the tank of the machine. This may be necessary for different reasons, among which for example in the case of machines on loan for use together with a contract for the supply of the preparation. The control of the filling level may be useful to see if the machine is used in accordance with the preparation sold.

In fact, it may happen that, fraudulently, the person who has the machine on loan for use does not respect the purchase contract for the supply of the preparation, thus using preparations of different brands at lower costs.

Besides causing economic damage, it may also cause damage to the machine which works with unsuitable preparations.

The control of the level of the tank allows, among other things, the possibility of finding the amount of dispensed product.

As is well known, in fact, the tank contains the final product to be dispensed which may be obtained for example by using suitable preparations, for example poured into said tank and possibly mixed with other ingredients such as water.

In any case, the tank will contain the product to be dispensed. As the product is dispensed the level decreases.

However, the remote control of the level of product in the tank is not simple.

This is generally performed with sensors which must however be arranged in such a way as to detect the level, for example also coming into contact with the product.

The sensors currently known and used for this purpose do not allow their simple application.

In particular, complex arrangements are often necessary in order to allow the sensor to work at best and these arrangements are not always simple to be found.

An erroneous arrangement may entail an erroneous detection of level.

In addition, these arrangements of the sensors are not always compatible with the needs of cleaning and sanitization of the machinery.

The publications US2004/011807, R0131655, US6925871, WO2004/036154 are also known.

### Summary of the invention

Therefore, the aim of the present invention is to provide a monitoring solution which solves said technical inconveniences.

In particular, the aim of the present invention is to provide a solution which allows, in an efficient, precise and functional manner, the possibility of monitoring the level of product present in a tank of a dispensing machine, preferably but not necessarily a slush machine, with a real-time and remote control.

More in particular, the aim of the present invention is to provide a solution with allows detection of this level with an arrangement of the elements designated to detection which is versatile and does not create cleaning issues.

These and other aims are obtained according to the appended claims.

In particular, it has been found that the predetermined aims are surprisingly reached through the use of at least one element (14) sensitive to light for detecting the level of product present in a tank (10) of a product dispensing machine, preferably a slush machine.

Therefore, it has been surprisingly found that an element sensitive to light is an element which has a high flexibility of positioning.

In fact, this element sensitive to light changes a condition thereof (or state or whatever) as a function of the amount of light hitting it and an analysis of said condition or variation of condition may be correlated with the presence of a product present in a tank and therefore taking advantage of it to detect the level of product present in the tank.

In particular, with a suitable function the condition detected of the element may be correlated with the amount of product present in the tank.

Obviously, this needs an arrangement of the element/s such that it/they is/are fully or partially shaded by any presence of the product in the tank.

In fact, if said element is positioned in such a way that it is fully or partially shaded by any level of the product present in the tank, then it follows that the state (or condition) of the element will be able to be used to correlate it with the level and find its measurement. In particular, the level present will condition the amount of light which hits the element, and the actual level may be found from it.

In particular, if the level is zero (empty or substantially empty tank) actually the element suitably arranged is not shaded and therefore it is fully hit by light which passes through the tank thus assuming a certain condition. If the element instead is fully or partially shaded by the level of product present in the tank then it will have a different condition which may be intermediate or full shading.

In all the abovementioned cases one may easily find the level through a simple algorithm and suitable processor programmed according to this algorithm which correlates the detected condition of the element to the amount of product present in the tank and therefore to its level, i.e., the height occupied with respect to the base of the tank.

That said, it is clear that according to this solution said at least one element sensitive to light may be arranged in many positions, even outside of the tank but as long as at least its active part which switches the state as a function of the light hitting it faces the inside of the tank such that it may be fully or partially shaded by any level present in the tank.

Advantageously, a plurality of elements (14) sensitive to light may be provided, generally arranged in succession one after the other.

This makes determination of the level easier and more precise.

In particular, the more single and discrete elements are in succession and the more precise is calculation of the level, given that the condition of each of them may be detected.

Obviously, advantageously, in all said cases, said at least one element or said plurality of element is/are arranged in such a way as to extend along at least a part of height of a tank (preferably along the whole useful height of the tank).

Advantageously, as disclosed above, the level of product is determined through detection of a condition of said at least one or a plurality of elements sensitive to light.

In fact, this condition is function of the brightness which hits said element/s sensitive to light.

If more discrete elements are in succession placed along the height of the tank, clearly the measurement is simpler and more precise.

Advantageously, said one or more elements 14 sensitive to light may be photovoltaic cells (14) (in particular, therefore, a sort of mini photovoltaic panels).

In this case, advantageously, said condition which is analyzed is the amount of electric current or electric energy in general produced by said one or more photovoltaic cells when they are hit by the light (for example solar light).

In addition, the further advantage of the use of photovoltaic cells is in the fact that sensors of prior art, for example the ultrasound ones, consume energy.

The use of photovoltaic cells solves this issue because, actually, while they function for allowing detection of the level through an analysis of their condition of energy production, they indeed produce electric energy usable, in addition to finding the level, also to feed one or more utilities of the machine.

For example, as is clarified below, the parts designated to process this information on condition in which is the element may be fed for finding the level (for example the processor) and/or the communication system which send the detected data remotely.

In addition, the object of the present invention is a method for detecting the level of product present in a tank (10) of a product dispensing machine, preferably a slush machine, the method providing:
- Arranging a tank (10) transparent to light;
- Arranging at least one or more element/s (14) sensitive to light in such a way as to extend along at least a part of height of the tank;
- The method providing the step of determining said level of product contained in the tank through detection of a condition of said at least one or more element/s sensitive to light and wherein said condition is function of the brightness which hits said at least one or more elements/s sensitive to light.

Advantageously, the step of arranging a plurality of elements sensitive to light arranged in succession may be provided in such a way as to cover at least a part of the height of said tank.

In this way, the measurement is much more precise.

The method provides in any case arrangement of said elements in such a way as to be shaded by the presence of the product itself in the tank depending on the amount of the product present.

In other words, given that these elements are arranged along the height of the tank, they or it (in the case that only one of suitable length is used) are fully or partially shaded by the product as a function of its level in the tank.

This/these element/s may be arranged indifferently inside or outside of the tank, thereby in contact or with no contact with the product.

In all the abovementioned cases, the arrangement is such that at least their active part (the one which must be hit by light) faces the product.

This means either arranging them directly in the tank facing the product or outside of the tank but facing the product with their active part.

More in particular, for example an arrangement of these elements sensitive to light may occur outside of the tank (for example attached to the outer wall) but with their active part which faces the inside of the tank, so that they may not be hit by light or be hit depending on the level of the product present in the tank.

Alternatively, they may be attached to the inner wall of the tank but facing the product or be placed directly in a central position of the tank (for example because they are connected to its lid) and therefore being immersed in any product present.

Advantageously, said at least one or more elements sensitive to light may be, in a preferred configuration, photovoltaic cells.

In this case, advantageously, said detected condition is the amount of electric current or the amount electric energy which is produced by said photovoltaic cells.

In this case, advantageously, and the method provides the determination of said level as a function of the amount of electric current or electric energy in general produced by said at least one or more photovoltaic cell/s.

In all the abovementioned cases, a step of processing the condition detected by said elements sensitive to light (for example the amount of electric energy produced in the case of photovoltaic cells) is provided for finding the level through a suitable algorithm as a function of said condition.

The algorithm is simple because all it has to do is taking into account the condition assumed by each element (in particular those elements which produce current and those elements producing less current or that do not produce current at all in the case of photovoltaic cells) for thus finding the level of the product in the tank.

This is also possible with a single element which will obviously have a different behavior along its longitudinal length depending on whether a part is hit by light and a part is not hit by light.

In all the aforementioned cases, the data processed by a suitable processor which receives said incoming detected condition/s is then sent remotely.

In particular, it is provided a step of transmission of the detected data of level, in such a way that data may be monitored remotely, for example through a suitable PC or mobile telephone device.

In addition, the object of the present invention is also an assembly comprising:

A tank (10) of a product dispensing machine, preferably a slush machine (therefore dispensing slush), and with said tank transparent to light;

At least one or more element/s sensitive to light (14) which extend/s along at least a part of height of said tank;

A processor programmed in such a way as to determine said level of product contained in the tank as a function of detection of a condition of said at least one or more element/s sensitive to light and wherein said condition is function of the brightness which hits said at least one or more element/s sensitive to light.

Therefore, as mentioned, the variation of a condition of an element sensitive to light is used to understand the level of the product.

Therefore, this entails an arrangement such that this element/s sensitive to light is more or less shaded by the product depending on the amount of product present in the tank.

The arrangement can be for example outside of the tank (for example attached to the wall) but with the active part of the element which faces the inside of the tank. In this way, the sensor may be shaded by any presence of the product.

Another arrangement may be inside the tank for example hung on the lid or attached to the wall.

The inner arrangement makes the shading easier but it may require greater cleanliness of the elements.

The arrangement outside of the tank fully solves the issue of cleanliness and sanitization of the elements.

Advantageously, in a possible solution said at least one element is a photovoltaic cell.

In this case, said condition is the amount of electric current or electric energy in general which is produced by said photovoltaic cell.

Advantageously, transmission means are comprised for remotely transmitting the detected data of level.

The object of the present invention is also a product dispensing machine, for example a slush machine which comprises an assembly as described above.

### Brief description of the drawings

The invention, in one or more embodiments thereof, will be described in detail below according to the following drawings:

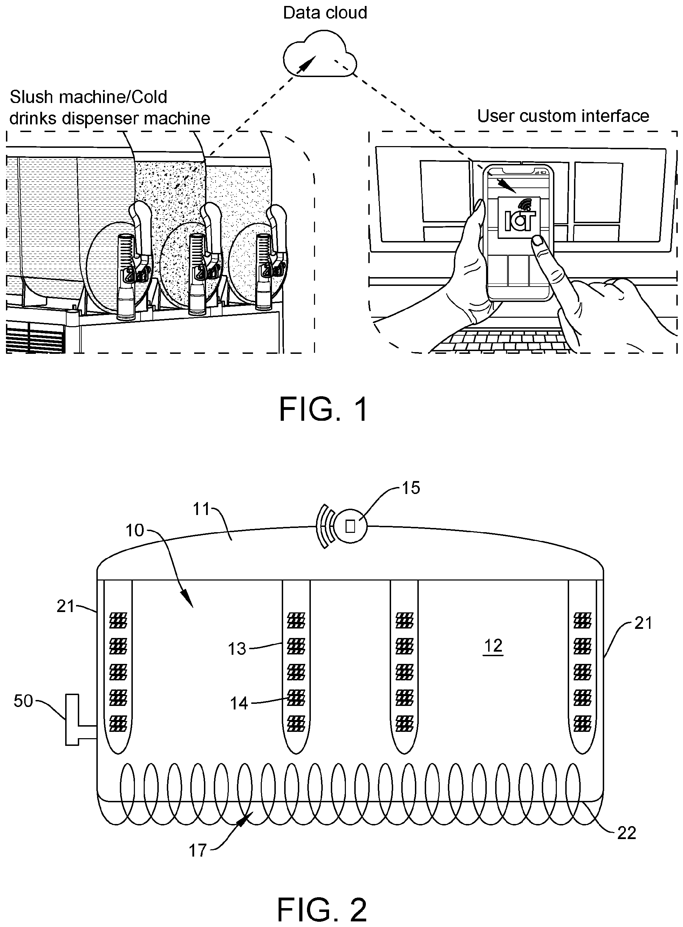

- Figure 1 is an overall outline which shows some slush machines, equipped with this system object of the invention, and which send information about the level detected in the tank to a "Cloud" system, which "Cloud" system may then be accessible to a user through for example a mobile telephone device with suitable App or through a PC; in this way, real-time, the level of product present in the tank of one or more dispensing machines, for example slush machines, may be monitored;
- Figure 2 shows better a possible solution by showing a tank of a dispensing machine, for example a slush machine, and highlights according to the solution the use of one or more rods 13 arranged on the lid of the tank in such a way as to be projected towards the base of the tank and with said rods provided with one or more elements 14 sensitive to light, for example solar or photovoltaic cells; it is then present a transmission module 15 which receives information processed by a suitable processor to send it outside; information may be then remotely monitored;

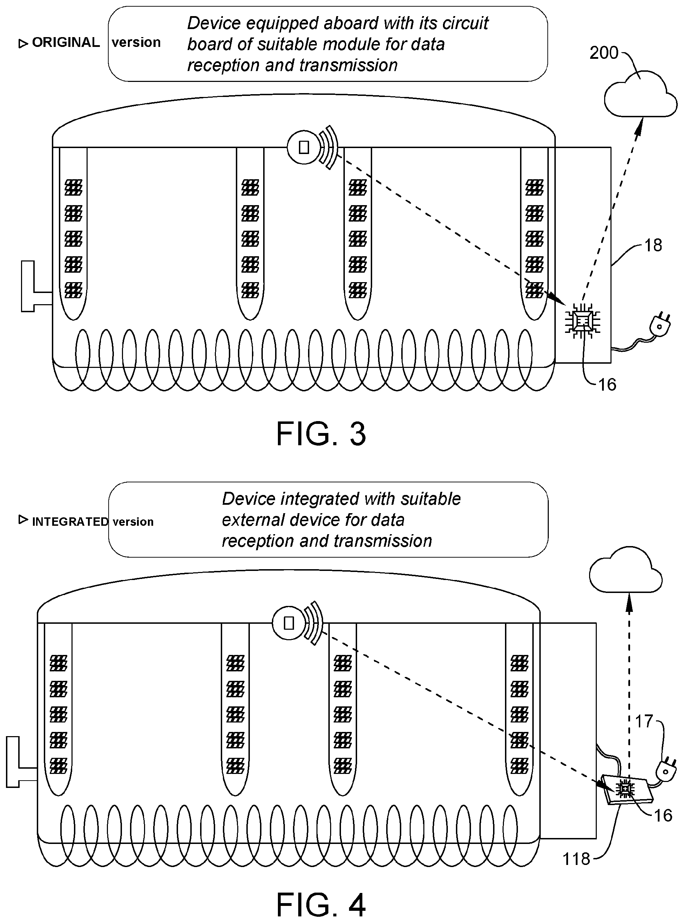

- Figure 3 shows in particular a solution in which the transmission module 15 sends to a circuit board 16 relative to a specific reception and transmission module 18 which indeed is designated to receive information by the transmission module 15 to then send information outside, for example to the cloud system; in this solution the reception and transmission module 18 which comprises the suitable circuit board 16 may be integral to the tank;
- Figure 4 shows the solution in which the circuit board 16 is aboard a reception and transmission module which instead is outside the machine and may be connected to it;

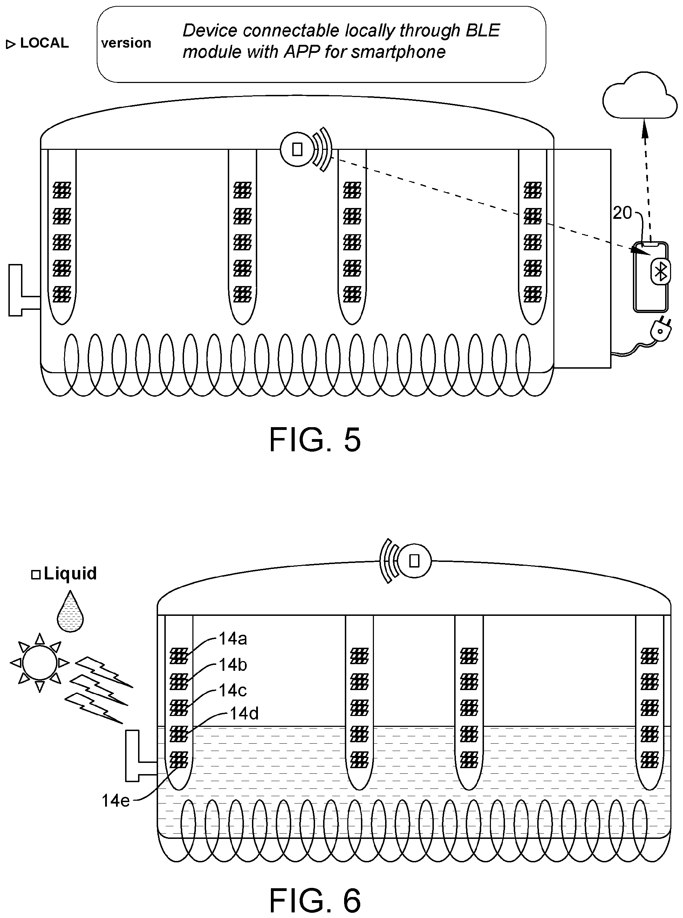

- Figure 5 shows a further variant in which the transmission module 15 communicates, for example via Bluetooth with a mobile device 20, thereby without the presence of the reception and transmission module of figure 3 and 4;
- Figures from 6 to 8 show examples in which the tank contains inside for example liquid or creams or ice (for example in the case of slushes);

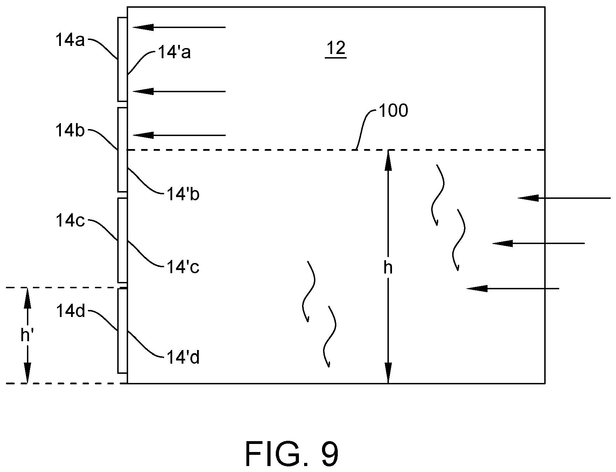

- Figure 9 shows a further outline with the aim of better understanding of the functionality of the invention.

### Detailed description of some configurations of the invention

As is better described below, the invention refers to a monitoring system which allows, in a precise and reliable manner, the remote control of the filling level of the tank of a product dispensing machine.

The product is generally of the fluid type.

For example, the product may be a liquid, such as drinks, for example cold drinks, i.e., which are kept at a temperature which is generally lower than the regular environmental temperature in the place where said machines are present (for example in a café).

In addition, the product may be of the creamy type, that is creams, such as coffee cream.

In a preferred embodiment of the invention, the machine is a slush machine, such that the product in question is a mix of liquid and crushed ice, i.e. slush.

As already introduced in the prior art, the machine is known per se and therefore what has already been mentioned in the prior art is valid.

In particular, a tank 10 having a certain containment volume 12 may be present. The tank may possibly be equipped with cooling means 13 which allows reaching of a certain operative temperature in said tank 10, in particular in its inner volume 12.

The pump, as shown for example in figure 2, is box-shaped and comprises lateral walls 21 and a base 22. The part opposite to the base 22 is generally open to allow insertion of the preparation for obtaining the product to be dispensed. This upper opening is then closed with the removable lid 11. The abovementioned walls delimit the containment volume 12.

Then the machine will be equipped with the traditional working means (not shown in the figure for the sake of simplicity) which serve, in combination with the temperature conditions which are created, to work the preparation for obtaining the finished product which is then dispensed generally through a tap 50.

The working means are therefore suitable for the type of product to be obtained.

For example, in the event that the machine is a slush machine (that is a machine preparing slushes), the working means will be (as is well known) of the type adapted to work the preparation possibly mixed with water and/or other liquids in order to obtain slush with the suitable temperature kept inside the tank thanks to the cooling means 17.

According to the invention, the tank is now equipped with level measurement means (13, 14).

Thanks to these level measurement means (13, 14) the level of product occupied inside the tank may be detected real-time and send such data to an external system, for example a Cloud system in such a way that such data may be read/consulted remotely through a PC or App for mobile device real-time.

For example, figure 6 shows the case of a liquid which occupies part of the tank volume and in which the level value of the liquid inside the tank may be read, i.e., where the surface of the liquid is positioned inside the tank.

In this way, one may know whether the tank is full, empty or in other conditions (for example half-full, almost empty, etc.).

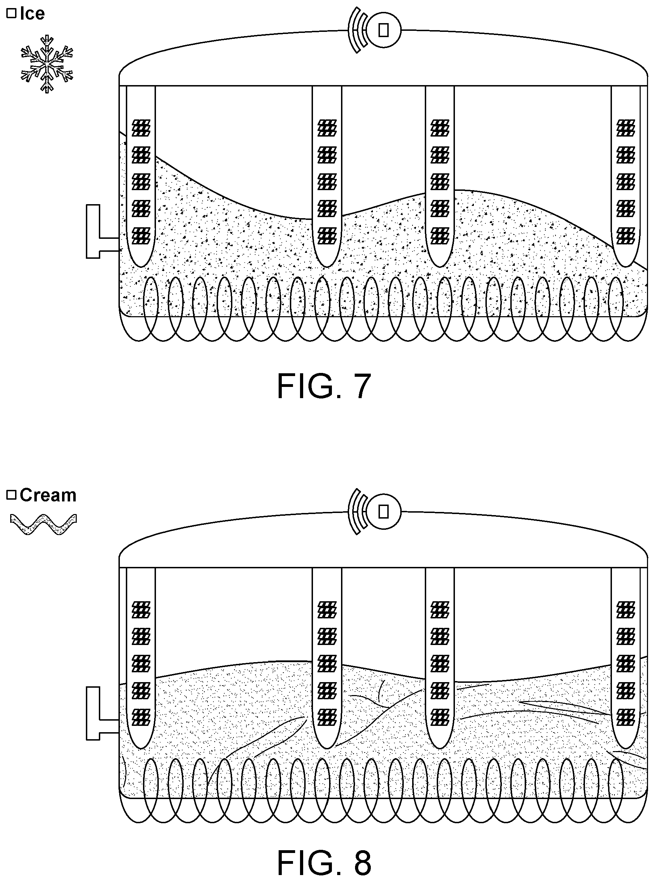

Figure 7 and figure 8 show two further examples of the case of slush and cream.

That said, now according to the invention these level measurement means are in the form of at least one element 14 of the type sensitive to light, i.e., which assumes a certain condition as a function of the amount of light hitting it.

For example, as described below, these one or more elements might be in the form of photovoltaic cells whose condition to be detected is indeed the amount of electric energy which they are capable of producing as a function of the light hitting them.

The photovoltaic cells are not the only solution since elements which vary their condition as a function of the light hitting them are known and the detection of this condition allows finding the level of product contained.

For example, there are photochromatic glasses which change coloration as a function of the light hitting them. The data of coloration which they assume is an indication of the light hitting them and this would allow use of this data for finding the product contained in the tank, in the same way of the energy of the photovoltaic cells.

In particular, this at least one element sensitive to light is arranged in correspondence of the tank, which obviously must be transparent for allowing passage of the light and making sure that the light possibly hits the element.

This element sensitive to light could be arranged indifferently inside or outside the tank according to many possible solutions and in such a way that the passage of light hitting it in use is shaded by the presence of any product present in the tank.

As is specifically described below, the arrangements may be many as long as the presence of product in the tank shades at least partially the element obviously as a function of the height occupied by the product in the tank.

These elements 14 sensitive to light have generally an active side which is the one changing the condition or anyway acquires a certain condition different from the one of absence of light, when it is hit by light.

The arrangement is such that this active part may be obscured, and therefore prevented from taking light, when a certain amount of product is contained in the tank.

In this way, by analyzing the change of condition of the element, one may find the level of product because, if a certain change of condition occurs, this entails a certain exposure to light or a certain condition of absence of light, and this means that the element is not obscured or is obscured by the product.

Although a single element of predetermined length may be provided and placed to cover the height or part of the height of the tank, the solution with a plurality of elements sensitive to light 14 which are arranged in such a way as to extend, in succession one after the other, along the height of the tank is a preferred solution given that it allows a more precise measurement.

In all cases, therefore, there may be a single element sensitive to light of predetermined length which is applied along the height of the tank to cover at least part or the whole height of the tank and it may be arranged outside or inside it.

In a preferred alternative, more elements sensitive to light may be arranged in succession to cover at least part or the whole height of the tank both outside and inside.

The preferred form of the invention provides that these elements are photovoltaic cells and wherein said variation of condition is exactly the amount of current that they produce.

In fact, it is known that a photovoltaic cell produces more or less current or electric energy as a function of the light hitting it.

In all the aforementioned cases, a processor which analyzes this condition assumed by the element sensitive to light is provided for correlating it with the level of product present in the tank, on the basis of a suitable algorithm.

In the specific and preferred case of photovoltaic cell, the processor controls how much current or electric energy is produced by the cell or by the cells for finding the level of product present, as a function of it.

The following figures refer to the case of photovoltaic cells but, as mentioned, the concept may be extended to any element sensitive to light and which has a variation of condition as a function of the light hitting it.

If for example photovoltaic cells are used, the ones hit by light produce current while the ones obscured by the product do not produce current or produce less current as a function of the light hitting them.

Then this detection of variation of condition, i.e., of variation of electric energy produced along the height of the tank (given that the arrangement of the cells covers the height of the tank), allows finding of the level.

### PREFERRED CONFIGURATION WITH MORE PHOTOVOLTAIC CELLS ARRANGED IN SUCCESSION:

The figures described now in detail refer to the photovoltaic cell but what is described may be extended in the same way to other elements sensitive to light.

Therefore, the preferred configuration provides more photovoltaic cells arranged in succession to cover the height of the tank or part of it.

More in particular, one or more rods 13 (also named tubular bodies 13) may be present, which are hollow inside to contain and protect the photovoltaic cells. The rods are arranged to penetrate the containment volume of the tank.

In particular, these one or more rods are arranged in such a way as to penetrate the containment volume of the tank starting by the upper opening and moving towards the base, preferably in a vertical way with respect to the base of the tank.

In a preferred solution, as shown in the appended figures (for example figure 2), these rods may be fixed directly to the lid of the tank with the lid which is obviously of the removable type to be capable of giving access to the containment volume formed by the tank.

In this way, as is shown in the figures, these rods (one or more than one) are projected from the upper opening towards the base (preferably in on orthogonal way with respect to the base) and may have such a length as to touch and/or brush the base or be slightly shorter in such a way as to be lifted with respect to base.

In all the aforementioned cases, without prejudice to the indications above, each rod is equipped with a plurality of photovoltaic cells 14 arranged in succession along each tubular body 14 (rod 14).

The photovoltaic cell allows understanding of when it is hit by light (therefore it gives an indication of reception of light, for example the sun or suitably arranged artificial light) because it produces electric current in an amount which is function of the light hitting it. In the absence of light it has a certain condition (for example it does not produce current in the case of photovoltaic cell) and when it is hit by light it has a change of condition (for example it produces current in the case of photovoltaic cell).

In any case, when the element sensitive to light is hit by light a sort of reaction occurs and this reaction may be used for finding the level of product.

In fact, given that the position of these elements along the height of the tank is known, the state of each of them may easily be verified for understanding if they are hit by light or not. The level may be easily found from here.

In fact, it is recalled that the arrangement of the cells along the height of the tank is such that it is obscured by any presence of product.

Therefore, if their state corresponds with a state in which they are not hit by light, this entails that the cells are obscured by the product. It follows that moving from the base 22 towards the lid, as soon as and if one of these elements is found in a state, or condition or whatever, in which it is evident that it is hit by light, this entails that this is the level reached by the product.

The more product there is, the higher the level and therefore the more are the "obscured" cells compared to the ones receiving light.

Each rod has along its length a distribution of these photovoltaic cells arranged in series from one end to the other.

Therefore, each rod may provide a certain number of solar cells (or photovoltaic or whatever) 14 arranged along its length to cover all or most part of its length.

Therefore, moving to figure 6, as an example, depending on the level of product present, it will occur that some of these elements sensitive to light (for example the solar cells) will be immersed in the product while others will be outside the product.

The ones outside the product will have a light absorption greater than the one immersed in the product and obscured by the product.

Therefore, for example, if each rod is equipped with a series of elements sensitive to light (for example solar cells as mentioned) it is possible to easily find the level by verifying which are the elements absorbing light and the elements not absorbing light or absorbing less light because they are obscured by the product.

For example, if these elements are solar cells, it will be sufficient to verify which cells produce electric energy given that they are hit by light and which cells do not produce it because they are not hit by light and therefore immersed in the product.

A processor correlates easily, with a suitable algorithm, information regarding the state of the photovoltaic cells for finding the filling level of the tank.

In addition, the specific use of solar cells (i.e., photovoltaic cells) has also the advantage of producing current which may self-feed the machine and/or said system described here and with which the machine is equipped.

The photovoltaic cells are a preferred example of solution but other solutions are not excluded in which the element is in any way sensitive to light and therefore its variation of state (any state) may be detected as a function of the light hitting it.

Therefore, by arranging a series of these elements along the length of the rod, the level of product may be found by simply verifying the state or condition in which these elements are.

For example, figure 6 shows by way of non-limiting example (valid for any product) the case of five elements sensitive to light (for example five photovoltaic cells). These have been indicated as (14a, 14b, 14c, 14d, 14e). As one may see from this example (the same is also valid for figure 7 or 8) the photovoltaic cells from (14a) to (14c) are outside the surface of the liquid while 14d and 14e are immersed in the liquid.

It follows that the light beams (still outlined in figure 6) hitting the rod will be absorbed differently from the cells (14a, 14b, 14c) outside the surface of the liquid with respect to the ones immersed in the liquid (14d, 14e).

In the case of photovoltaic cells, therefore, the production of energy will be different for the cells (14a, 14b, 14c) with respect to the immersed ones (14d, 14e) and this allows finding of the value of level occupied by the liquid in the tank.

In particular, the photovoltaic cells (14e, 14d) may have low or null production of energy given that light is shaded by the contained product (for example a liquid or a cream in figure 8 or slush as per figure 7). The remaining cells from 14c to 14a produce instead a certain amount of electric energy because they are outside of the surface of the product.

The processor receives the entering data of energy produced by the cells in series and through a suitable algorithm finds the level (or surface or whatever) of the product by correlating the data relative to the energy value of the cell with its known positioning along the height of the tank.

The same is valid if the elements are not photovoltaic cells but other elements even so sensitive to light of which at least one parameter indicating the fact that a certain amount of light is hitting them may be detected.

According to an advantageous aspect of the invention, although a single rod is sufficient, more rods connected to the lid are preferably used or anyway more rows in general of elements 14 arranged along the height of the tank.

This is because thicker products like creams or slushes might not have a uniformly distributed level, as for example indicated in figure 7 and in figure 8. It follows that a measurement in more points allows then a more precise average calculation estimate to be made, thus obtaining the filling level, which is equal to saying how much product is present in the tank with respect to the maximum capacity of containment of the specific tank in question.

Therefore, in other words, a distribution of more rods, each containing a row in succession of photovoltaic cells, certainly gives a more precise estimate.

Anyway a single rod may be used.

The rods may be preferably of plastic and obviously of transparent material for allowing passage of light.

The elements sensitive to light may be arranged inside the rod, thus being protected from direct contact with the product.

In particular, the rod may form a tubular body obviously transparent to light for allowing its passage, and with the elements arranged inside it exactly as indicated in the figures. In this way, the rod acts as a support for the photovoltaic cells which may then be connected to the lid and, in addition, the elements sensitive to light (in particular indeed the photovoltaic cells) would be preserved from direct contact with the product.

In a variant these elements 14 could be anyway arranged on the outer surface of the rod.

In a further variant, without prejudice to the above description, the elements 14 sensitive to light may be arranged in an elongated transparent container and connected for example along the wall of the tank and therefore not necessarily hung on the lid or be directly attached to the wall of the tank, therefore, in direct contact with the product if the wall is the one facing the inside of the tank.

In a further variant, said photovoltaic cells may be fixed on the part of the tank however on the outer part (therefore being outside the containment volume of the tank). In any case they must face the product with their active part, the one receiving light.

Obviously, in all the configurations, for correct functioning, also the tank 10 must be of material transparent to light.

The data for detecting the state of the photovoltaic cell (therefore the produced energy) are processed by the processor which therefore detects the level as a function of the measured energy, as already described.

Therefore, figure 9 outlines the tank 12 and shows a case in which the photovoltaic cells are arranged outside of the tank with their active side (14'a, 14'b, 14'c, 14'd) facing the inside of the tank.

The tank contains a product whose level is indicated schematically with the dashed line 100.

As is shown in figure, the light beams (horizontal arrows) cannot intercept or intercept with less intensity the cells (14d), (14c) and part of the cell (14b) because they are under the surface 100 of the product. Their energy value produced will be a predetermined value which is certainly lower than the energy value produced by the cell 14a fully hit by the light above the surface 100. In addition, the energy value of the cell 14b is certainly greater than the one of the cells 14c and 14d given that it is partially exposed to light, that is emerging from the surface 100. The energy value produced by the cell 14b is certainly lower than the one of the cell 14a because the cell 14b is partially shaded by the product while 14a is free.

It follows that with a suitable algorithm the filling value of the tank may be easily found, i.e., determining the height (h) of the surface 100 with respect to the base, by analyzing the energy values produced by the cells and obviously knowing their arrangement height (h') with respect to the base of the tank.

The arrangement outside of the cells is only an example and not limiting as already mentioned.

### CONFIGURATION WITH SINGLE PHOTOVOLTAIC CELL:

What has already been described above is valid for this configuration with a single cell of such a length as to cover the height of the tank. The only difference is in that the algorithm finds the height (h) value of the level by analyzing a variation of energy production which the cell itself has along its longitudinal length.

### CONFIGURATION WITH OTHER TYPES OF ELEMENTS SENSITIVE TO LIGHT:

As per the indications above the photovoltaic cell is not the only solution and the description above is valid for other possible elements sensitive to light.

### FURTHER CONSIDERATIONS:

In all the aforementioned cases introduced above and specifically described, the date of level (therefore the height h) is obtained by a processor and sent to a transmission module 15.

The transmission module may transmit the data remotely in such a way that it may be monitored remotely, for example through a mobile device or PC or on the Internet.

More in particular, in a solution, the transmission module 15 transmits to a further receiving and transmission module 18 equipped with its processor 16 in such a way that the data is sent to a cloud system 200.

In this case the module 18 is integrated into the machine body and particularly into the tank.

In a variant, as shown in figure 4, the module 18 may be separate element which is connected electrically.

In all cases, the possible presence of a power plug 17 connectable to the domestic grid is highlighted.

In a variant, as per figure 5, the module 15 may transmit in Bluetooth mode to a mobile device and from it to a cloud system.

The solution in which the module 15 directly transmits remotely, for example to the cloud system, without any further interposed transmission element is not excluded.

In all cases the data may anyway be detected on the Internet for example by connecting to the designated cloud system.

Therefore, its dedicated area on the Internet may be provided to which one may register and through which one or more machines associated with the subject accessing his private area may be monitored, once having logged in.

Therefore, the machine may be monitored real-time by the designated person who may control the level of the tank and any other parameters at any time and in an efficient manner.

Therefore, figure 1 shows a general outline with a series of slush machines placed beside each other and each equipped with the tank according to the description. The elements sensitive to light detect the level of product and therefore the amount of product in the tank and send the data to the cloud system. This data may be monitored at any time through a PC or a mobile telephone device.

## Claims

1. The use of at least one element (14) sensitive to light for detecting the level of product present in a transparent tank (10) of a slush machine.

2. The use, according to claim 1, wherein said element (14) sensitive to light assumes a certain condition as a function of the amount of light hitting it.

3. The use, according to claim 2, wherein an analysis of said condition or variation of condition is correlated with the presence of a product present in the tank by detecting the level of product present in the tank through arrangement of the element/s such that it/they is/are fully or partially shaded by any presence of the product in the tank.

4. The use, according to one or more of the previous claims, wherein a plurality of elements (14) sensitive to light is comprised.

5. The use, according to one or more of the previous claims, wherein said at least one element or said plurality of elements is/are arranged in such a way as to extend along at least a part of height of a tank, preferably outside of the tank.

6. The use, according to one or more of the previous claims, wherein the level of product is determined through detection of said condition of said at least one or a plurality of elements sensitive to light and wherein said condition is function of the brightness which hits said element/s sensitive to light.

7. The use, according to one or more of the previous claims, wherein said one or more elements (14) sensitive to light are photovoltaic cells (14) and wherein said condition is the amount of electric energy produced by said one or more photovoltaic cells.

8. The use, according to claim 7, wherein there are one or more rods (13) comprising said photovoltaic cells arranged along the height of said rods and with said rods connected to the outside of the tank in such a way as to be shaded by the light which hits the tank fully or partially as a function of the amount of product present in the tank.

9. A method for detecting the level of product present in a tank (10) of a slush machine, the method providing:
- Arranging the tank (10) transparent to light;
- Arranging at least one or more element/s (14) sensitive to light in such a way as to extend along at least a part of height of the tank;
- The method providing the step of determining said level of product contained in the tank through detection of a condition of said at least one or more element/s sensitive to light and wherein said condition is function of the brightness which hits said at least one or more elements/s sensitive to light.

10. The method, according to claim 9, providing the step of arranging a plurality of elements sensitive to light in succession in such a way as to cover at least a part of the height of said tank.

11. The method, according to claim 9 or 10, wherein said at least one or more elements sensitive to light are photovoltaic cells, said detected condition being the amount of electric energy which is produced by the photovoltaic cells, the method providing determination of said level as a function of the amount of said electric energy produced by said at least one photovoltaic cell.

12. The method, according to one or more of the previous claims, wherein a step of transmitting the detected data of level is provided, in such a way that data can be remotely monitored.

13. An assembly comprising:
- A tank (10) of a slush machine, and with said tank transparent to light;
- At least one or more element/s sensitive to light (14) which extend/s along at least a part of height of said tank;
- A processor programmed in such a way as to determine said level of product contained in the tank as a function of detection of a condition of said at least one or more element/s sensitive to light and wherein said condition is function of the brightness which hits said at least one or more element/s sensitive to light and wherein said one or more element/s assume/s a certain condition as a function of the amount light hitting it/them.
- Preferably wherein there are further comprised transmission means for remotely transmitting the detected data of level.

14. The assembly, according to claim 13, wherein said at least one element is a photovoltaic cell and said condition is the amount of electric energy which is produced by said photovoltaic cell and wherein there are one or more rods (13) comprising photovoltaic cells arranged along the height of said rods, said rods being connected to the outside of the tank in such a way as to be shaded by the light which hits the tank fully or partially as a function of the amount of product present in the tank.
- Preferably wherein transmission means are further comprised for remotely transmitting the detected data of level.

15. A slush machine which comprises an assembly according to one or more of the previous claims 13 or 14.
